# FASCICULE DE BREVET EUROPEEN

(11) **EP 3 826 972 B1**
(45) Date de publication et mention de la délivrance du brevet: **27.03.2024**
(21) Numéro de dépôt: 19736765.9
(22) Date de dépôt: 12.07.2019
(51) Int. Cl.: C03C 17/34, C03C 17/36

(54) **PROCEDE D'OBTENTION D'UN MIROIR DECORATIF**
VERFAHREN ZUM ERHALTEN EINES DEKORATIVEN SPIEGELS
METHOD FOR OBTAINING A DECORATIVE MIRROR

(30) Priorité: 26.07.2018 FR 1856944
(43) Date de publication de la demande: 02.06.2021
(73) Titulaire: Saint-Gobain Glass France, 92400 Courbevoie (FR)
(72) Inventeur: MARIA, Juliette, 60200 Compiègne (FR); YON, Alexia, 60500 Chantilly (FR)
(74) Mandataire: Saint-Gobain Recherche
(86) Numéro de dépôt international: PCT/EP2019/068864
(87) Numéro de publication internationale: WO 2020/020671

(56) Documents cités:
- WO-A1-2017/203123
- BE-A4- 1 002 215
- DE-A1- 4 022 745
- US-A- 3 152 948

## Description

L'invention se rapporte au domaine des miroirs décoratifs. Elle porte plus particulièrement sur l'obtention de miroirs dits « partiels », comprenant des zones réfléchissantes formant motif et des zones non-réfléchissantes. Les miroirs comprennent généralement des feuilles de verre revêtues d'un revêtement réfléchissant. Par « zone réfléchissante » on entend dans le présent texte une zone qui présente, côté revêtement, une réflexion lumineuse au sens de la norme EN 410 d'au moins 25%, notamment d'au moins 40%, voire d'au moins 50%. La transmission lumineuse de la zone réfléchissante, toujours au sens de la norme EN 410, est généralement d'au plus 70%, de préférence d'au plus 20%, voire d'au plus 15% ou 10%. Une « zone non réfléchissante » est une zone présentant une réflexion lumineuse d'au plus 20%, notamment d'au plus 15%, voire d'au plus 10%. Il s'agit généralement d'une zone où le verre est non-revêtu, qui présente donc une transmission lumineuse généralement bien supérieure à la réflexion lumineuse. De tels miroirs décoratifs peuvent être utilisés par exemple dans le bâtiment, l'ameublement intérieur, les dispositifs électroménagers etc...

Une autre exigence portant sur les miroirs concerne leur résistance mécanique. Pour des raisons touchant à la sécurité des personnes, il peut être utile d'augmenter la résistance à l'impact des miroirs, tout en assurant en cas de bris une fragmentation du miroir en fragments non-coupants. Pour cela, la feuille de verre peut être trempée thermiquement, en la chauffant au-delà de sa température de transition vitreuse puis en la refroidissant rapidement de manière à créer à la surface du verre des contraintes de compression. Le revêtement réfléchissant peut être déposé après la trempe, mais comme un verre trempé ne peut plus être découpé cela implique des étapes de dépôt après découpe, donc sur des feuilles de verre de tailles très diverses, ce qui n'est pas intéressant d'un point de vue économique. Alternativement, le revêtement réfléchissant est déposé avant la trempe, sur des substrats standards de très grande taille, lesquels sont découpés aux dimensions voulues, avant l'étape de trempe. Cette alternative est plus intéressante économiquement et industriellement parlant, mais nécessite le développement de revêtements réfléchissants résistant à des températures supérieures à 500°C, voire à 600°C.

Dans le cadre de cette deuxième alternative, la production de miroirs partiels pose des difficultés. Les miroirs partiels sont souvent produits en petites séries, car les dimensions et les designs désirés par les clients sont très variés. Il n'est donc pas économiquement envisageable - même si cela est techniquement possible, par exemple à l'aide de masques - de ne déposer le revêtement réfléchissant que sur certaines zones du substrat de grande taille, en particulier lorsque le revêtement est déposé par pulvérisation cathodique magnétron. Des solutions telles que l'ablation laser ont été envisagées mais sont très coûteuses.

Le document BE 1 002 215 A4 décrit un miroir produit par argenture dans lequel une solution réagissant avec l'argent est déposée pour former des produits de réaction avec l'argent. Par conséquent, les zones éventuellement non-réfléchissantes ne sont pas des zones de verre non revêtue mais sont recouvertes par ce produit de réaction. Le verre n'est en outre pas trempé. Dans le document DE 40 22 745 A1, il est décrit un procédé dans lequel un miroir est soumis à un rayonnement laser pour retirer sélectivement la couche réfléchissante. Le verre n'est pas un verre trempé. Le miroir comporte des zones réfléchissantes et non-réfléchissantes. Le document US 3 152 948 A décrit un procédé dans lequel une couche de résine est déposée sélectivement avant l'argenture. La zone dans laquelle la résine est déposée produit une réflexion diffuse et non pas une zone non-réfléchissante dans laquelle la feuille de verre n'est pas revêtue. Le verre n'est en outre pas trempé.

L'invention a donc pour but de proposer un procédé économique de fabrication de miroirs partiels à résistance mécanique élevée.

A cet effet, l'invention a pour objet un procédé d'obtention d'un miroir décoratif comprenant des zones réfléchissantes formant motif et des zones non-réfléchissantes, ledit procédé comprenant les étapes suivantes :
- la fourniture d'une feuille de verre silico-sodocalcique revêtue d'un revêtement réfléchissant sur la totalité d'une de ses faces, puis
- une étape d'application d'une composition comprenant un sel de phosphate sur ledit revêtement réfléchissant, uniquement sur des zones d'application, lesdites zones d'application étant les zones destinées à devenir les zones non-réfléchissantes, puis
- une étape de trempe de ladite feuille de verre, dans laquelle on soumet ladite feuille de verre à une température d'au moins 550°C, provoquant la dissolution du revêtement réfléchissant dans les zones d'application de manière à former lesdites zones non-réfléchissantes dans lesquelles la feuille de verre n'est pas revêtue.

Un autre objet de l'invention est un miroir décoratif comprenant des zones réfléchissantes formant motif et des zones non-réfléchissantes, susceptible d'être obtenu par le procédé selon l'invention. Le miroir comprend une feuille de verre silico-sodocalcique non-revêtue dans lesdites zones non-réfléchissantes et revêtue d'un revêtement réfléchissant dans lesdites zones réfléchissantes.

L'invention a aussi pour objet un produit intermédiaire destiné à former un miroir décoratif comprenant des zones réfléchissantes formant motif et des zones non-réfléchissantes, ledit produit intermédiaire comprenant une feuille de verre silico-sodocalcique revêtue sur la totalité d'une de ses faces d'un revêtement réfléchissant, ledit revêtement réfléchissant étant revêtu dans certaines zones d'une composition comprenant un sel de phosphate.

Le procédé selon l'invention permet aisément d'obtenir des miroirs partiels à un coût réduit puisqu'il n'implique que l'ajout d'une étape d'application sélective d'une composition contenant un sel de phosphate. Lors de la trempe, ce dernier dissout totalement l'empilement réfléchissant sous-jacent, de sorte que, dans les zones où la composition a été appliquée, ne subsiste plus que le verre nu.

La feuille de verre est de préférence plane. L'épaisseur de la feuille de verre est de préférence comprise dans un domaine allant de 1 à 19 mm, notamment de 2 à 12 mm et même de 3 à 9 mm. De préférence, la feuille de verre présente au moins une dimension supérieure à 50 cm, notamment à 1 m.

La feuille de verre est de préférence obtenue par flottage, procédé dans lequel du verre fondu est déversé sur un bain d'étain en fusion. Le verre est de préférence incolore, mais peut être teinté, par exemple en bleu, vert, gris, bronze etc...

Le verre silico-sodocalcique possède généralement une composition chimique pondérale comprenant 60 à 75% de SiO₂, 10 à 20% de Na₂O, 5 à 15% de CaO, 0 à 10% de MgO, 0 à 5% d'Al₂O₃.

Selon un mode de réalisation préféré, le revêtement réfléchissant comprend au moins une couche fonctionnelle. Il peut en comprendre une seule, ou plusieurs, par exemple deux, identiques ou différentes. Par couche fonctionnelle on entend une couche capable d'impartir au revêtement, et éventuellement en combinaison avec d'autres couches dudit revêtement, les propriétés de réflexion et de transmission qui en font un revêtement réfléchissant au sens de l'invention.

Au moins une couche fonctionnelle, notamment la ou chaque couche fonctionnelle, est de préférence une couche métallique ou une couche d'un nitrure métallique.

La ou chaque couche métallique est de préférence à base de chrome ou de niobium. La ou chaque couche d'un nitrure métallique est de préférence une couche de nitrure de niobium ou à base d'un tel nitrure.

Lorsque la couche métallique est à base de chrome, il s'agit avantageusement d'une couche comprenant au moins 45% en poids de chrome. La teneur pondérale en chrome est de préférence d'au moins 50%, notamment d'au moins 55% et même d'au moins 60% ou d'au moins 70%, voire d'au moins 80% ou d'au moins 90%. La couche métallique peut être constituée de chrome. Alternativement, la couche métallique peut être en un alliage de chrome et d'au moins un autre élément, notamment choisi parmi Al et/ou Si. On peut notamment citer des alliages CrAl contenant 75 à 80% en poids de chrome, des alliages CrSi contenant 45 à 85% en poids de chrome, des alliages CrAlSi contenant 70 à 80% en poids de chrome. De tels matériaux présentent à la fois une réflexion lumineuse et une résistance à la trempe élevées. La ou chaque couche à base de chrome possède de préférence une épaisseur physique allant de 10 à 60 nm, notamment de 20 à 40 nm.

Lorsque la couche métallique est à base de niobium, il s'agit avantageusement d'une couche de niobium. Elle possède de préférence une épaisseur physique allant de 5 à 50 nm, notamment de 8 à 40 nm.

Lorsque la couche fonctionnelle est en nitrure de niobium, elle possède de préférence une épaisseur physique allant de 5 à 50 nm, notamment de 8 à 40 nm.

Afin d'éviter tout changement d'aspect lié à la trempe, le revêtement réfléchissant est de préférence un empilement de couches minces dans lequel la ou chaque couche fonctionnelle, notamment métallique, est entourée par deux couches protectrices en oxydes, nitrures ou oxynitrures, en particulier de silicium ou d'aluminium. Les nitrures et oxynitrures sont préférés, et le nitrure de silicium s'est révélé particulièrement efficace pour protéger la couche fonctionnelle, notamment métallique, lors de la trempe.

L'épaisseur physique de chaque couche protectrice est de préférence comprise dans un domaine allant de 2 à 50 nm, notamment de 5 à 40 nm. Lorsque la couche métallique est à base de chrome, une couche en titane ou silicium ayant une épaisseur allant de 1 à 5 nm est avantageusement déposée en tant que dernière couche de l'empilement. Lorsque la couche fonctionnelle est en nitrure métallique, notamment en nitrure de niobium, une couche métallique, notamment en titane, ayant une épaisseur allant de 1 à 5 nm, est avantageusement déposée directement sur et/ou sous la couche fonctionnelle.

Un revêtement réfléchissant préféré comprend une première couche de nitrure de silicium, puis une couche de chrome ou de niobium, ou encore de nitrure de niobium, puis une deuxième couche de nitrure de silicium.

Selon un autre mode de réalisation, le revêtement réfléchissant est un empilement alternant des couches minces diélectriques à haut indice de réfraction et des couches minces diélectriques à bas indice de réfraction. Les épaisseurs optiques des couches sont alors choisies pour maximiser la réflexion en créant des interférences constructives. L'empilement peut notamment comprendre la succession, en s'éloignant de la feuille de verre, d'une première couche mince à base d'oxyde de titane, d'une couche mince à base d'oxyde de silicium, puis d'une deuxième couche mince à base d'oxyde de titane. L'oxyde de titane peut être remplacé par une solution solide d'oxyde de titane et d'un oxyde d'un autre métal, par exemple le zirconium.

L'épaisseur physique du revêtement réfléchissant est de préférence d'au plus 250 nm.

Le revêtement réfléchissant a de préférence été déposé par pulvérisation cathodique, notamment assistée par champ magnétique (procédé dit magnétron). D'autres procédés sont envisageables, notamment des procédés de dépôt chimique en phase vapeur (CVD). Typiquement, le dépôt a été préalablement réalisé sur un substrat de grande taille, à partir duquel la feuille de verre a été obtenue par découpe. Le procédé selon l'invention peut donc comprendre une étape de dépôt du revêtement réfléchissant sur la totalité d'une face d'un substrat de verre silico-sodocalcique, puis une étape de découpe dudit substrat afin d'obtenir la feuille de verre revêtue servant aux étapes suivantes du procédé. L'étape de dépôt du revêtement réfléchissant sera toutefois généralement réalisée dans un autre lieu, éventuellement par un autre acteur, que les étapes ultérieures de découpe, d'application de la composition comprenant le sel de phosphate et de trempe.

Le sel de phosphate est de préférence un phosphate d'ammonium ou un phosphate de métal alcalin, notamment un phosphate de sodium. Par le terme « phosphate », on entend également les hydrogénophosphates et les dihydrogénophosphates. Le terme générique phosphate de sodium couvre donc l'hydrogénophosphate de sodium Na₂HPO₄, le dihydrogénophosphate de sodium NaH₂PO₄, et le phosphate trisodique Na₃PO₄, ainsi que les mélanges de ces composés.

La composition comprenant le sel de phosphate comprend de préférence un solvant, notamment organique, et une résine. Les quantités de solvant et de résine permettent de réguler la viscosité de la composition, et sont à adapter en fonction du procédé d'application utilisé.

La résine permet également de former une couche temporaire qui présente à la fois une adhésion suffisante à la feuille de verre et de bonnes propriétés mécaniques. Une certaine tenue mécanique est en effet bénéfique afin d'éviter que cette couche temporaire ne soit endommagée avant l'étape de trempe, par exemple lors du transport entre l'atelier où la composition est appliquée et l'atelier de trempe. Cela est particulièrement appréciable lorsque les deux ateliers ne sont pas situés dans la même usine, mais même dans le cas contraire, la feuille de verre passe généralement sur des convoyeurs susceptibles d'endommager la couche temporaire. La résine et le solvant sont éliminés au plus tard lors de l'étape de trempe. Les résines et solvants classiquement utilisés dans les compositions d'émaux se sont révélés bien adaptés.

L'étape d'application est de préférence réalisée par sérigraphie. La sérigraphie comprend le dépôt, notamment à l'aide d'un racle, d'un liquide pâteux sur la feuille de verre au travers de mailles d'un écran de sérigraphie. Les mailles de l'écran sont obturées dans la partie correspondant aux zones de la feuille de verre que l'on ne veut pas revêtir, de sorte que la pâte ne peut passer au travers de l'écran que dans les zones à imprimer, selon un motif prédéfini. Le motif à imprimer correspond ici au négatif du motif réfléchissant final.

L'étape d'application peut être réalisée par d'autres techniques, par exemple par pulvérisation, au rouleau ou au rideau, en utilisant un masque afin de ne procéder à l'application que dans les zones d'application. Une application au rouleau est également envisageable même en l'absence de masque lorsque le décor est suffisamment simple, comme par exemple une zone périphérique, pour la réalisation d'une marie-louise. D'autres techniques possibles d'application sont les procédés d'impression numérique, notamment par jet d'encre.

L'étape d'application est de préférence suivie d'une étape de séchage. Le séchage permet le cas échéant d'éliminer au moins une partie du solvant et/ou de réticuler au moins partiellement la résine. La température de séchage est typiquement comprise entre 100 et 250°C, notamment entre 120 et 200°C. Un séchage mettant en œuvre un rayonnement infrarouge est par exemple adapté.

Lors de l'étape de trempe, la feuille de verre est soumise à une température de préférence d'au moins 600°C, notamment d'au moins 620°C et/ou d'au plus 750°C, notamment d'au plus 725°C ou d'au plus 700°C. La feuille de verre est ensuite soumise à un refroidissement rapide, par exemple au moyen de buses d'air.

De préférence, le procédé comprend en outre, après l'étape de trempe, une étape de nettoyage. Après la trempe subsiste en effet un dépôt sous forme de gel, lequel est aisément enlevé par exemple par aspersion d'eau ou immersion dans l'eau.

Dans le miroir obtenu, la réflexion lumineuse des zones réfléchissantes, du côté du revêtement réfléchissant, est de préférence d'au moins 25%, notamment d'au moins 40%, voire d'au moins 50%. La réflexion lumineuse est généralement d'au plus 90%. Il s'agit de préférence d'une réflexion spéculaire et non d'une réflexion diffuse. La réflexion lumineuse des zones non-réfléchissantes correspond à celle du verre nu ; elle est donc de préférence de l'ordre de 6 à 10%, notamment autour de 8%. La transmission lumineuse des zones non-réfléchissantes est de préférence d'au moins 80%, notamment 85%, voire 89%, et généralement d'au plus 92%. La transmission lumineuse des zones réfléchissantes est de préférence d'au plus 70%, notamment d'au plus 30% ou 25%, voire d'au plus 20% ou 15%, ou même d'au plus 10%. Elle est typiquement d'au moins 1% ou d'au moins 5%. On peut en particulier distinguer des revêtements très réfléchissants, ayant une réflexion lumineuse entre 40% et 90%, notamment entre 50% et 80%, ainsi qu'une transmission lumineuse entre 1 et 25%, notamment entre 2 et 20%, voire entre 3 et 15%, et des revêtements moyennement réfléchissants, ayant une réflexion lumineuse entre 25% et 35% ainsi qu'une transmission lumineuse entre 40 et 70%. Ces derniers confèrent un effet miroir dans certaines conditions d'illumination.

Les zones réfléchissantes occupent de préférence de 10 à 90% de la surface de la feuille de verre, notamment de 20 à 80%.

Le motif formé par les zones réfléchissantes et/ou les zones non-réfléchissantes peut être quelconque car aucune limitation technologique ne se pose. Il peut s'agir par exemple d'un motif géométrique, périodique ou non, de la reproduction d'une image, d'un logo etc...

Le miroir peut être utilisé dans de nombreuses applications, tant en intérieur qu'en extérieur : cloisons et portes intérieures, parois de douche et pare-bains, agencement de magasins, salons et showroom, parements de façade, parties d'appareils électroménagers comme par exemple des portes de four etc.

Une porte de four peut ainsi comprendre, comme paroi la plus proche de l'utilisateur, un miroir décoratif selon l'invention, comprenant par exemple une zone réfléchissante sous forme d'un cadre périphérique, présentant un aspect métallique, et une partie non-réfléchissante centrale permettant à l'utilisateur de visualiser l'intérieur du four.

Les exemples qui suivent illustrent l'invention de manière non-limitative.

### Exemple 1

Une feuille de verre clair silico-sodocalcique a été obtenue en découpant un substrat de verre revêtu au préalable par pulvérisation cathodique d'un empilement réfléchissant, commercialisé sous la référence SGG Mirastar.

L'empilement réfléchissant utilisé consiste en la succession, à partir du verre, d'une première couche de nitrure de silicium, d'une couche de chrome, puis d'une deuxième couche de nitrure de silicium.

Sur cette feuille de verre revêtue a été appliquée par sérigraphie une composition comprenant du phosphate de sodium ainsi qu'une résine, selon des motifs géométriques décoratifs. L'application a permis d'obtenir une couche temporaire ayant une épaisseur humide (avant séchage) d'environ 25 µm.

La feuille de verre ainsi revêtue a ensuite été soumise à un traitement de trempe thermique impliquant un chauffage vers 650-680°C pendant 180 secondes dans un four de trempe.

Après trempe, les zones d'application du sel de phosphate étaient recouvertes d'un gel qui a pu être retiré par simple passage d'un chiffon humide. Dans ces zones, le revêtement réfléchissant a totalement disparu, faisant apparaître le verre nu, donc transparent. Dans les zones adjacentes en revanche, qui n'avaient pas été recouvertes du sel de phosphate, le revêtement réfléchissant est resté présent.

Le miroir obtenu présente donc des zones réfléchissantes et des zones non-réfléchissantes formant des motifs, la séparation entre les zones étant en outre très nette. La réflexion lumineuse côté revêtement des zones réfléchissantes est de 60%, et la transmission lumineuse de 3%.

### Exemple 2

L'exemple 2 ne se distingue de l'exemple 1 que par la nature de l'empilement réfléchissant, ici l'empilement commercialisé par la Demanderesse sous la référence SGG Cool-Lite ST108. Cet empilement consiste en la succession, à partir d'un substrat de verre clair, d'une première couche de nitrure de silicium, d'une couche de niobium, puis d'une deuxième couche de nitrure de silicium.

Des résultats de même nature que ceux de l'exemple 1 ont été obtenus. La réflexion lumineuse côté revêtement des zones réfléchissantes est de 44%, et la transmission lumineuse de 9%.

### Exemple 3

L'exemple 3 se distingue également de l'exemple 1 par la nature de l'empilement réfléchissant, en l'occurrence l'empilement commercialisé par la Demanderesse sous la référence Cool-Lite ST Bright Silver.

Dans cet exemple, le revêtement réfléchissant est un empilement alternant des couches minces diélectriques à haut indice de réfraction et des couches minces diélectriques à bas indice de réfraction. Plus précisément cet empilement comprend une couche d'oxyde de titane (à haut indice), puis une couche de silice (à bas indice) et enfin une couche à base d'oxyde de titane (à haut indice).

Des résultats de même nature que ceux de l'exemple 1 ont été obtenus. La réflexion lumineuse côté revêtement des zones réfléchissantes est de 31%, et la transmission lumineuse de 67%.

## Revendications

1. Procédé d'obtention d'un miroir décoratif comprenant des zones réfléchissantes formant motif et des zones non-réfléchissantes, ledit procédé comprenant les étapes suivantes :
- la fourniture d'une feuille de verre silico-sodocalcique revêtue d'un revêtement réfléchissant sur la totalité d'une de ses faces, puis
- une étape d'application d'une composition comprenant un sel de phosphate sur ledit revêtement réfléchissant, uniquement sur des zones d'application, lesdites zones d'application étant les zones destinées à devenir les zones non-réfléchissantes, puis
- une étape de trempe de ladite feuille de verre, dans laquelle on soumet ladite feuille de verre à une température d'au moins 550°C, provoquant la dissolution du revêtement réfléchissant dans les zones d'application de manière à former lesdites zones non-réfléchissantes dans lesquelles la feuille de verre n'est pas revêtue.

2. Procédé selon la revendication 1, dans lequel le revêtement réfléchissant comprend au moins une couche fonctionnelle qui est une couche métallique ou une couche d'un nitrure métallique.

3. Procédé selon la revendication 2, dans lequel la couche métallique est à base de chrome ou de niobium.

4. Procédé selon la revendication 2, dans lequel la couche d'un nitrure métallique est une couche de nitrure de niobium.

5. Procédé selon l'une des revendications 2 à 4, dans lequel le revêtement réfléchissant est un empilement de couches minces dans lequel la ou chaque couche fonctionnelle, notamment métallique, est entourée par deux couches protectrices en oxydes, nitrures ou oxynitrures, en particulier de silicium ou d'aluminium.

6. Procédé selon la revendication 1, dans lequel le revêtement réfléchissant est un empilement alternant des couches minces diélectriques à haut indice de réfraction et des couches minces diélectriques à bas indice de réfraction.

7. Procédé selon l'une des revendications précédentes, dans lequel le revêtement réfléchissant a été déposé par pulvérisation cathodique.

8. Procédé selon l'une des revendications précédentes, dans lequel le sel de phosphate est un phosphate d'ammonium ou un phosphate de métal alcalin, notamment un phosphate de sodium.

9. Procédé selon l'une des revendications précédentes, dans lequel la composition comprenant le sel de phosphate comprend un solvant, notamment organique, et une résine.

10. Procédé selon l'une des revendications précédentes, dans lequel l'étape d'application est réalisée par sérigraphie.

11. Procédé selon l'une des revendications précédentes, comprenant en outre après l'étape de trempe une étape de nettoyage.

12. Miroir décoratif comprenant des zones réfléchissantes formant motif et des zones non-réfléchissantes, susceptible d'être obtenu par le procédé selon l'une des revendications précédentes, ledit miroir comprenant une feuille de verre silico-sodocalcique non-revêtue dans lesdites zones non-réfléchissantes et revêtue d'un revêtement réfléchissant dans lesdites zones réfléchissantes.

13. Miroir décoratif selon la revendication précédente, tel que la réflexion lumineuse des zones réfléchissantes, du côté du revêtement réfléchissant, est d'au moins 25%

14. Miroir décoratif selon la revendication précédente, tel que la réflexion lumineuse des zones réfléchissantes, du côté du revêtement réfléchissant, est d'au moins 40%, notamment 50%.

15. Cloison, porte intérieure, paroi de douche, pare-bain, agencement de magasins, de salons ou de showroom, parement de façade, ou partie d'appareils électroménagers, notamment porte de four, comprenant un miroir décoratif selon l'une des revendications 12 à 14.

16. Produit intermédiaire destiné à former un miroir décoratif comprenant des zones réfléchissantes formant motif et des zones non-réfléchissantes, ledit produit intermédiaire comprenant une feuille de verre silico-sodocalcique revêtue sur la totalité d'une de ses faces d'un revêtement réfléchissant, ledit revêtement réfléchissant étant revêtu dans certaines zones d'une composition comprenant un sel de phosphate.

## Patentansprüche

1. Verfahren zum Herstellen eines dekorativen Spiegels, umfassend ein Muster ausbildende reflektierende Bereiche und nicht reflektierende Bereiche, das Verfahren umfassend die folgenden Schritte:
- Bereitstellen einer Kalknatronsilikatglasscheibe, die auf der Gesamtheit einer ihrer Flächen mit einer reflektierenden Beschichtung beschichtet ist, dann
- einen Schritt eines Auftragens einer Zusammensetzung, umfassend ein Phosphatsalz, auf die reflektierende Beschichtung, nur auf die Auftragungsbereiche, wobei die Auftragungsbereiche die Bereiche sind, die dafür bestimmt sind, die nicht reflektierenden Bereiche zu werden, dann
- einen Schritt eines Härtens der Glasscheibe, bei dem die Glasscheibe einer Temperatur von mindestens 550 °C ausgesetzt wird, wobei die reflektierende Beschichtung in den Auftragsbereichen aufgelöst wird, sodass die nicht reflektierenden Bereiche ausgebildet werden, in denen die Glasscheibe nicht beschichtet ist.

2. Verfahren nach Anspruch 1, wobei die reflektierende Beschichtung mindestens eine Funktionsschicht, die eine metallische Schicht oder eine Schicht aus einem Metallnitrid ist, umfasst.

3. Verfahren nach Anspruch 2, wobei die metallische Schicht auf Chrom oder Niob basiert.

4. Verfahren nach Anspruch 2, wobei die Schicht aus einem Metallnitrid eine Schicht aus Niobnitrid ist.

5. Verfahren nach einem der Ansprüche 2 bis 4, wobei die reflektierende Beschichtung ein Dünnschichtstapel ist, bei dem die oder jede, insbesondere metallische, Funktionsschicht, von zwei Schutzschichten aus Oxiden, Nitriden oder Oxynitriden, insbesondere von Silizium oder Aluminium, umgeben ist.

6. Verfahren nach Anspruch 1, wobei die reflektierende Beschichtung ein Stapel, der dielektrische Dünnschichten mit hohem Brechungsindex und dielektrische Dünnschichten mit niedrigem Brechungsindex abwechselt, ist.

7. Verfahren nach einem der vorstehenden Ansprüche, wobei die reflektierende Beschichtung durch Kathodenzerstäubung aufgebracht wurde.

8. Verfahren nach einem der vorstehenden Ansprüche, wobei das Phosphatsalz ein Ammoniumphosphat oder ein Alkalimetallphosphat, insbesondere ein Natriumphosphat, ist.

9. Verfahren nach einem der vorstehenden Ansprüche, wobei die Zusammensetzung, umfassend das Phosphatsalz, ein Lösungsmittel, insbesondere ein organisches, und ein Harz umfasst.

10. Verfahren nach einem der vorstehenden Ansprüche, wobei der Schritt des Aufbringens der Farbzusammensetzung durch Siebdruck durchgeführt wird.

11. Verfahren nach einem der vorstehenden Ansprüche, ferner umfassend nach dem Schritt des Härtens einen Schritt eines Reinigens.

12. Dekorativer Spiegel, umfassend ein Muster ausbildende reflektierende Bereiche und nicht reflektierende Bereiche, die geeignet sind, durch das Verfahren nach einem der vorstehenden Ansprüche hergestellt zu werden, der Spiegel umfassend eine Kalknatronsilikatglasscheibe, die in den nicht reflektierenden Bereichen nicht beschichtet und in den reflektierenden Bereichen mit einer reflektieren Beschichtung beschichtet ist.

13. Dekorativer Spiegel nach dem vorstehenden Anspruch, wobei die Lichtreflexion der reflektierenden Bereiche auf der Seite der reflektierenden Beschichtung mindestens 25 % beträgt.

14. Dekorativer Spiegel nach dem vorstehenden Anspruch, wobei die Lichtreflexion der reflektierenden Bereiche auf der Seite der reflektierenden Beschichtung mindestens 40 %, insbesondere 50 %, beträgt.

15. Trennwand, Innentür, Duschwand, Badabtrennung, Laden-, Messe- oder Ausstellungsraumanordnung, Fassadenverkleidung oder Teil eines Haushaltsgeräts, insbesondere eine Ofentür, umfassend einen dekorativen Spiegel nach einem der Ansprüche 12 bis 14.

16. Zwischenerzeugnis, das dafür bestimmt ist, einen dekorativen Spiegel auszubilden, umfassend Muster ausbildende reflektierende Bereiche und nicht reflektierende Bereiche, wobei das Zwischenerzeugnis eine Kalknatronsilikatglasscheibe umfasst, die auf der Gesamtheit einer ihrer Flächen mit einer reflektierenden Beschichtung beschichtet ist, wobei die reflektierende Beschichtung in bestimmten Bereichen mit einer Zusammensetzung, umfassend ein Phosphatsalz, beschichtet ist.

## Claims

1. A process for obtaining a decorative mirror comprising reflective regions forming a pattern and non-reflective regions, said process comprising the following steps:
- providing a sheet of soda-lime-silica glass coated with a reflective coating on the entirety of one of the faces thereof, then
- a step of applying a composition comprising a phosphate salt to said reflective coating, solely in application regions, said application regions being intended to become the non-reflective regions, then
- a step of tempering said glass sheet, in which said glass sheet is subjected to a temperature of at least 550°C, causing the reflective coating to dissolve in the application regions so as to form said non-reflective regions in which the glass sheet is not coated.

2. The process as claimed in claim 1, wherein the reflective coating comprises at least one functional layer that is a metal layer or a layer of a metal nitride.

3. The process as claimed in claim 2, wherein the metal layer is based on chromium or niobium.

4. The process as claimed in claim 2, wherein the layer of a metal nitride is a layer of niobium nitride.

5. The process as claimed in one of claims 2 to 4, wherein the reflective coating is a stack of thin layers, in which stack the or each, in particular metal, functional layer is flanked by two protective layers made of oxides, nitrides or oxynitrides, in particular of silicon or aluminum.

6. The process as claimed in claim 1, wherein the reflective coating is an alternating stack of thin high-refractive-index dielectric layers and of thin low-refractive-index dielectric layers.

7. The process as claimed in one of the preceding claims, wherein the reflective coating is deposited by cathode sputtering.

8. The process as claimed in one of the preceding claims, wherein the phosphate salt is an ammonium phosphate or an alkali-metal phosphate, and in particular a sodium phosphate.

9. The process as claimed in one of the preceding claims, wherein the composition comprising the phosphate salt comprises an, in particular organic, solvent and a resin.

10. The process as claimed in one of the preceding claims, wherein the applying step is carried out by screen-printing.

11. The process as claimed in one of the preceding claims, furthermore comprising, after the tempering step, a cleaning step.

12. A decorative mirror comprising reflective regions forming a pattern and non-reflective regions, said mirror being capable of being obtained using the process as claimed in one of the preceding claims, said mirror comprising a sheet of soda-lime-silica glass that is not coated in said non-reflective regions and that is coated with a reflective coating in said reflective regions.

13. The decorative mirror as claimed in the preceding claim, such that the light reflectance of the reflective regions, on the side of the reflective coating, is at least 25%.

14. The decorative mirror as claimed in the preceding claim, such that the light reflectance in the reflective regions, on the side of the reflective coating, is at least 40%, and in particular 50%.

15. A partition, interior door, shower screen, bath screen, store fixture or fitting, salon fixture or fitting, room fixture or fitting, showroom fixture or fitting, facade cladding or part of an electrical appliance, especially an oven door, comprising a decorative mirror as claimed in one of claims 12 to 14.

16. An intermediate product intended to form a decorative mirror comprising reflective regions forming a pattern and non-reflective regions, said intermediate product comprising a sheet of soda-lime-silica glass coated on the entirety of one of the faces thereof with a reflective coating, said reflective coating being coated in certain regions with a composition comprising a phosphate salt.
